# EUROPEAN PATENT APPLICATION

(11) **EP 4 461 761 A1**
(43) Date of publication of application: **13.11.2024**
(21) Application number: 23737316.2
(22) Date of filing: 06.01.2023
(51) Int. Cl.: C08G 63/672

(54) **COPOLYESTER RESIN**

(30) Priority: 06.01.2022 JP 2022001275
(71) Applicant: Toyobo Co., Ltd., Kita-ku Osaka-shi, Osaka 530-0001 (JP)
(72) Inventor: YAMAMOTO Yu, Otsu-shi, Shiga 520-0292 (JP); KINAMI Maki, Otsu-shi, Shiga 520-0292 (JP)
(74) Representative: Müller-Boré & Partner Patentanwälte PartG mbB
(86) International application number: PCT/JP2023/000210
(87) International publication number: WO 2023/132368

(57) **Abstract**

An object of the present invention is to provide copolyester resin having a furan skeleton and configured to enhance a crystallization rate and solve a problem in production such as blocking, and further avoid a risk such as bleed-out. The invention specifically provides a copolyester resin comprising: a polyvalent carboxylic acid component and a polyhydric alcohol component as constituent components, wherein the polyvalent carboxylic acid component contains a polyvalent carboxylic acid component (A) having a furan skeleton, and an aliphatic polyvalent carboxylic acid component (B) at a molar ratio of (A)/(B)=95/5 to 99.9/0.1.

## Description

### TECHNICAL FIELD

The present invention relates to copolyester resin having a furan skeleton. Specifically, the present invention relates to copolyester resin containing polyvalent carboxylic acid having a furan skeleton and aliphatic polyvalent carboxylic acid as a polyvalent carboxylic acid component.

### BACKGROUND ART

In recent years, attention has been paid to polyethylenefuranoate (PEF) in which 2,5-furandicarboxylic acid (FDCA) derived from biomass is used, as an environment-friendly or environmentally-sustainable material. For example, PEF has mechanical strength and thermal properties equivalent to those of polyethylene terephthalate (PET) and further has more excellent gas barrier properties than PET. From such viewpoints, PEF is expected to be used in a wide range in addition to existing PET substitute applications such as bottles, films, and fibers.

However, PEF has such a problem in production that PEF has a lower crystallization rate than PET. A method in which a molecular weight is increased by solid-state polymerization (SSP) is applied to PEF, similarly to PET. However, if crystallinity is insufficient, blocking occurs, and the quality of the product may be degraded. A method in which annealing treatment is performed for preventing blocking is known but is not preferable from the viewpoint of life cycle assessment (LCA) and production cost.

Therefore, for example, as disclosed in Patent Literature 1, improvement of a crystallization rate is attempted by using a crystal nucleating agent. However, the crystal nucleating agent may cause bleed-out, outgas, or the like after molding, and there is concern about hygiene and safety.

Furthermore, as disclosed in Patent Literature 2, it is clear that, in a case where several mol% of IPA, FDCA, or succinic acid as a crystallization retardant is copolymerized with PET, the crystallization rate of PET is reduced, and copolymerization with a small amount of the crystallization retardant is considered to inhibit crystallization of a main backbone. Furthermore, as disclosed in Non-Patent Literature 1, also when 8 mol% of succinic acid as aliphatic dicarboxylic acid is copolymerized with PEF, the crystallization rate is equivalent to that of PEF.

Therefore, enhancement of a crystallization rate of PEF by copolymerization can be said to be difficult.

### CITATION LIST

### PATENT LITERATURE

[PTL 1] Japanese Laid-Open Patent Publication No. 2013-155388
[PTL 2] International Publication No. WO16/140901

### NON PATENT LITERATURE

[NPL 1] RSC Adv., 2016, 6, 84003-84015

### SUMMARY OF THE INVENTION

### PROBLEMS TO BE SOLVED BY THE INVENTION

An object of the present invention is to provide copolyester resin having a furan skeleton and configured to enhance a crystallization rate and solve a problem in production such as blocking, and further avoid a risk such as bleed-out.

### SOLUTION TO THE PROBLEMS

The inventors of the present invention have found, as a result of thorough research and study for solving the aforementioned problem, that, by copolymerizing a small amount of aliphatic polyvalent carboxylic acid with polyvalent carboxylic acid having a furan skeleton as a polyvalent carboxylic acid component, copolyester resin having a furan skeleton and configured to enhance a crystallization rate can be provided.

That is, the present invention has the following configuration.
1. A copolyester resin comprising: a polyvalent carboxylic acid component and a polyhydric alcohol component as constituent components, wherein the polyvalent carboxylic acid component contains a polyvalent carboxylic acid component (A) having a furan skeleton, and an aliphatic polyvalent carboxylic acid component (B) at a molar ratio of (A)/(B)=95/5 to 99.9/0.1.
2. The copolyester resin according to the above 1., comprising aluminum atoms and phosphorus atoms.
3. The copolyester resin according to the above 1. or 2., wherein the aliphatic polyvalent carboxylic acid component (B) is a C2 to C12 aliphatic dicarboxylic acid.
4. The copolyester resin according to the above 1. to 3., wherein the aliphatic polyvalent carboxylic acid component (B) is a C3 to C7 aliphatic dicarboxylic acid.
5. The copolyester resin according to any one of the above 1. to 4., wherein ethylene glycol is contained as the polyhydric alcohol component.
6. The copolyester resin according to any one of the above 1. to 5., wherein the copolyester resin has a melting point of 200°C or higher.
7. The copolyester resin according to any one of the above 1. to 6., wherein the copolyester resin has a glass transition temperature of 65°C or higher.
8. The copolyester resin according to any one of the above 1. to 7., wherein the copolyester resin has a reduced viscosity ranging from 0.1 dl/g to 0.6 dl/g.
9. The copolyester resin according to any one of the above 1. to 8., wherein the aliphatic polyvalent carboxylic acid component (B) is a C3 to C7 aliphatic dicarboxylic acid, and the copolyester resin has a glass transition temperature of 65°C or higher.
10. A molded product formed of the copolyester resin according to any one of the above 1. to 9., wherein the molded product is a bottle, a film, or a fiber.

### ADVANTAGEOUS EFFECTS OF THE INVENTION

The copolyester resin of the present invention contains, in a molecular chain, a furan skeleton and a small amount of aliphatic polyvalent carboxylic acid, and can thus have both excellent heat resistance and high crystallinity. Thus, blocking can be avoided without using a crystal nucleating agent, productivity can be enhanced, and CO2 emission can be reduced.

### DESCRIPTION OF EMBODIMENTS

A typical embodiment for implementing the present invention will be specifically described below. However, the present invention is not limited to the following embodiment within the gist of the present invention.

### <Copolyester resin>

Copolyester resin of the present invention is copolyester resin that includes a polyvalent carboxylic acid component and a polyhydric alcohol component as constituent components. As the polyvalent carboxylic acid component, a polyvalent carboxylic acid component (A) having a furan skeleton is included. Examples of the furan skeleton include furan and furan-substituted products (that is, product in which one or two hydrogen atoms of furan is substituted with any substituent; the substituent does not include a carboxy group). Examples of the substituent introduced into the furan-substituted product include C1 to C10 alkyl groups, C6 to C18 aromatic groups, halogen atoms, and C1 to C10 alkoxy groups. The furan-substituted product is preferably a furan-substituted product substituted with a C1 to C4 alkyl group, or furan having no substituent, and is more preferably furan having no substituent.

The polyvalent carboxylic acid component (A) having a furan skeleton is preferably furandicarboxylic acid having two carboxy groups. Furandicarboxylic acid has carboxy groups that can react with other monomers, at the second and the third positions of a furan ring, the second and the fourth positions thereof, the second and the fifth positions thereof, or the third and the fourth positions thereof. Furandicarboxylic acid (2,5-furandicarboxylic acid) having carboxy groups at the second and the fifth positions is particularly preferable from the viewpoint of heat resistance. As a raw material monomer for producing the copolyester resin, furandicarboxylic acid and a derivative thereof can be used. Examples of the derivative include C 1 to C4 alkyl esters. Among them, methyl ester, ethyl ester, n-propyl ester, isopropyl ester, and the like are preferable, and methyl ester is more preferable.

One of them may be used alone, or two or more of them may be mixed and used.

The copolyester resin of the present invention includes an aliphatic polyvalent carboxylic acid component (B) as the polyvalent carboxylic acid component. Exhibition of the effect of the present invention by alicyclic polyvalent carboxylic acid is difficult, and the aliphatic polyvalent carboxylic acid component (B) does not include alicyclic polyvalent carboxylic acid.

The aliphatic polyvalent carboxylic acid component (B) is preferably aliphatic dicarboxylic acid having two carboxy groups. Examples thereof include aliphatic dicarboxylic acids such as succinic acid, adipic acid, azelaic acid, sebacic acid, dodecanedioic acid, and dimer acid. Among them, C2 to C12 aliphatic dicarboxylic acids are preferable.

The aliphatic polyvalent carboxylic acid component (B) may be saturated aliphatic dicarboxylic acid or unsaturated dicarboxylic acid. However, saturated aliphatic dicarboxylic acid is preferable.

The aliphatic polyvalent carboxylic acid component (B) may be linear aliphatic dicarboxylic acid or branched aliphatic dicarboxylic acid. However, linear aliphatic dicarboxylic acid is preferable.

As a raw material monomer for producing the copolyester resin, aliphatic dicarboxylic acid and a derivative thereof can be used. The derivative is the same as described above.

The aliphatic polyvalent carboxylic acid component (B) is preferably C2 to C12 linear saturated aliphatic dicarboxylic acid, more preferably C2 to C10 linear saturated aliphatic dicarboxylic acid, and even more preferably C3 to C7 linear saturated aliphatic dicarboxylic acid.

In the copolyester resin of the present invention, the polyvalent carboxylic acid component includes the polyvalent carboxylic acid component (A) having a furan skeleton and the aliphatic polyvalent carboxylic acid component (B) at a molar ratio of (A)/(B)=95/5 to 99.9/0.1.

When the total of contents of the polyvalent carboxylic acid component (A) having a furan skeleton and the aliphatic polyvalent carboxylic acid component (B) is 100 mol%, the content of the carboxylic acid component (A) having a furan skeleton is preferably 95 mol% or more, more preferably 96 mol% or more, and even more preferably 97 mol% or more. The content of the carboxylic acid component (A) having a furan skeleton is preferably 99.9 mol% or smaller, more preferably 99.3 mol% or smaller, and even more preferably 98.5 mol% or smaller.

When the total of the contents of the polyvalent carboxylic acid component (A) having a furan skeleton and the aliphatic polyvalent carboxylic acid component (B) is 100 mol%, the content of the aliphatic polyvalent carboxylic acid component (B) is preferably 5 mol% or smaller, more preferably 4 mol% or smaller, and even more preferably 3 mol% or smaller. The content of the aliphatic polyvalent carboxylic acid component (B) is preferably 0.1 mol% or more, more preferably 0.7 mol% or more, and even more preferably 1.5 mol% or more.

Within the above-described ranges, both inhibition of degradation of thermal properties by copolymerization components, and enhancement of a crystallization rate can be achieved. Although the reason is not clear, it is considered that, when the aliphatic polyvalent carboxylic acid component (B) that is flexible is contained within the above-described optimal range, molecular mobility of the copolyester resin is enhanced, and therefore molecules are orderly aligned closely with each other so as to form crystals. If a copolymerization amount of the aliphatic polyvalent carboxylic acid component (B) is larger than the amount in the above-described range, it is considered that, although mobility is enhanced, a chain length of a block formed of the polyvalent carboxylic acid component (A) having a furan skeleton and a polyhydric alcohol component becomes short, and therefore formation of crystals becomes difficult.

The copolyester resin of the present invention may include, as the polyvalent carboxylic acid component, a carboxylic acid component other than the polyvalent carboxylic acid component (A) having a furan skeleton and the aliphatic polyvalent carboxylic acid component (B) to the extent that the effect of the present invention is not impaired. Examples of the other carboxylic acid component include aromatic polyvalent carboxylic acid and esters thereof, and alicyclic polyvalent carboxylic acid and esters thereof.

Examples of the aromatic polyvalent carboxylic acid include terephthalic acid, isophthalic acid, orthophthalic acid, naphthalene dicarboxylic acid, biphenyldicarboxylic acid, diphenic acid, 5-hydroxyisophthalic acid, trimellitic acid, pyromellitic acid, methylcyclohexene tricarboxylic acid, oxydiphthalic dianhydride (ODPA), 3,3',4,4'-benzophenone tetracarboxylic dianhydride (BTDA), 3,3',4,4'-diphenyltetracarboxylic dianhydride (BPDA), 3,3',4,4'-diphenylsulfone tetracarboxylic dianhydride (DSDA), 4,4'-(hexafluoroisopropylidene)diphthalic dianhydride (6FDA), and 2,2'-bis[(dicarboxyphenoxy)phenyl]propane dianhydride (BSAA). Other examples of the aromatic polyvalent carboxylic acid include aromatic dicarboxylic acids having a sulfonic acid group or a sulfonic acid salt group such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts and ammonium salts thereof.

Examples of the alicyclic polyvalent carboxylic acid include alicyclic dicarboxylic acids such as 1,4-cyclohexanedicarboxylic acid, 1,3-cyclohexanedicarboxylic acid, 1,2-cyclohexanedicarboxylic acid, and acid anhydrides thereof.

One of the other carboxylic acid components may be used alone, or two or more of them may be mixed and used. The other carboxylic acid component may be an ester-modified one.

In the copolyester resin of the present invention, when the content of the polyvalent carboxylic acid component is 100 mol%, the total content of the above-described other carboxylic acid component is preferably 3 mol% or smaller, more preferably 2 mol% or smaller, and even more preferably 1 mol% or smaller. It is also preferable that the above-described other carboxylic acid component is not contained, that is, the polyvalent carboxylic acid component only contains the polyvalent carboxylic acid component (A) having a furan skeleton and the aliphatic polyvalent carboxylic acid component (B).

In the copolyester resin of the present invention, the polyhydric alcohol component is preferably aliphatic polyhydric alcohol, alicyclic polyhydric alcohol, polyhydric alcohol containing an ether bond, or polyhydric alcohol containing an aromatic structure. Examples of the aliphatic polyhydric alcohol include ethylene glycol, 1,2-propylene glycol, 1,3-propanediol, 1,4-butanediol, 1,5-pentanediol, 2-methyl-1,3-propanediol, neopentylglycol, 1,6-hexanediol, 3-methyl-1,5-pentanediol, 1,7-heptanediol, 1,8-octanediol, 1,9-nonanediol, 2-ethyl-2-butylpropanediol, hydroxypivalic acid neopentylglycol ester, dimethylol heptane, 2,2,4-trimethyl-1,3-pentanediol, glycerin, pentaerythritol, trimethylolethane, trimethylolpentane, and trimethylolpropane.

Examples of the alicyclic polyhydric alcohol include 1,4-cyclohexanediol, 1,4-cyclohexanedimethanol, tricyclodecanediol, tricyclodecanedimethylol, spiroglycol, hydrogenated bisphenol A, ethylene oxide adducts of hydrogenated bisphenol A, and propylene oxide adducts of hydrogenated bisphenol A.

Examples of the polyhydric alcohol containing an ether bond include diethylene glycol, triethylene glycol, dipropylene glycol, polyethylene glycol, polypropylene glycol, polytetramethylene glycol, neopentyl glycol ethylene oxide adducts, and neopentyl glycol propylene oxide adducts as appropriate.

Examples of the polyhydric alcohol containing an aromatic structure include glycols obtained by adding one to several moles of ethylene oxide or propylene oxide to two phenolic hydroxyl groups of bisphenols, such as paraxylene glycol, meta-xylene glycol, ortho-xylene glycol, 1,4-phenylene glycol, ethylene oxide adducts of 1,4-phenylene glycol, bisphenol A, and ethylene oxide adducts and propylene oxide adducts of bisphenol A.

The polyhydric alcohol component preferably contains C2 to C6 linear saturated aliphatic diol from the viewpoint of physical properties of the obtained copolyester resin. When the content of the polyhydric alcohol component is 100 mol%, the content of the C2 to C6 linear saturated aliphatic diol is preferably 80 mol% or more, more preferably 90 mol% or more, even more preferably 95 mol% or more, and may be 100 mol%.

The C2 to C6 linear saturated aliphatic diol is preferably 1,4-butanediol, ethylene glycol, and 1,3-propanediol, more preferably 1,4-butanediol and/or ethylene glycol, and even more preferably ethylene glycol.

One of them may be used alone, or two or more of them may be mixed and used.

A raw material of the polyvalent carboxylic acid component (A) having a furan skeleton, which constitutes the copolyester resin of the present invention, may be one derived from petroleum or one derived from biomass. However, the raw material is preferably one derived from biomass.

### <Polymerization catalyst>

When polymerization for the copolyester resin of the present invention is performed, a polymerization catalyst is preferably used.

Examples of the polymerization catalyst include titanium compounds (tetra-n-butyl titanate, tetraisopropyl titanate, titanium oxyacetylacetonate, etc.), antimony compounds (tributoxy antimony, antimony trioxide, etc.), germanium compounds (tetra-n-butoxy germanium, germanium oxide, etc.), zinc compounds (zinc acetate, etc.), and aluminum compounds (aluminum acetate, aluminum acetyl acetate, etc.).

The copolyester resin of the present invention is preferably produced by using a polymerization catalyst containing an aluminum compound and a phosphorus compound.

### (Aluminium compound)

By using aluminium compound as a polymerization catalyst, resin having excellent polymerization reactivity and high heat resistance can be obtained.

The aluminium compound of the polymerization catalyst is not limited as long as the aluminium compound is dissolved in a solvent, and known aluminum compounds can be used without limitation. Examples of the aluminium compound include: carboxylates such as aluminium formate, aluminium acetate, basic aluminium acetate, aluminium propionate, aluminium oxalate, aluminium acrylate, aluminium laurate, aluminium stearate, aluminium benzoate, aluminium trichloroacetate, aluminium lactate, aluminium citrate, aluminium tartrate, and aluminium salicylate; inorganic acid salts such as aluminium chloride, aluminium hydroxide, aluminium hydroxychloride, aluminium nitrate, aluminium sulfate, aluminium carbonate, aluminium phosphate, and aluminium phosphonate; aluminium alkoxides such as aluminium methoxide, aluminium ethoxide, aluminium n-propoxide, aluminium isopropoxide, aluminium n-butoxide, and aluminium t-butoxide; chelate compounds such as aluminium acetylacetonate, aluminium ethyl acetoacetate, and aluminium ethyl acetoacetate diiso-propoxide; organic aluminium compounds such as trimethylaluminium and triethylaluminium and partially hydrolyzed products thereof; reaction products formed of alkoxide of aluminium, an aluminium chelate compound, and hydroxycarboxylic acid; aluminium oxide; ultrafine particle aluminium oxide; aluminium silicate; and composite oxides of aluminium, and titanium, silicon, zirconium, an alkali metal, and/or an alkaline-earth metal. Among them, at least one selected from the carboxylates, the inorganic acid salts, and the chelate compounds is preferable. Among them, at least one selected from aluminium acetate, basic aluminium acetate, aluminium chloride, aluminium hydroxide, aluminium hydroxychloride, and aluminium acetylacetonate is more preferable, at least one selected from aluminium acetate, basic aluminium acetate, aluminium chloride, aluminium hydroxide, aluminium hydroxychloride, and aluminium acetylacetonate is even more preferable, at least one selected from aluminium acetate and basic aluminium acetate is particularly preferable, and basic aluminium acetate is most preferable.

The above-described aluminium compound is preferably an aluminium compound that is dissolved in water or glycol. Examples of glycols include ethylene glycol, diethylene glycol, triethylene glycol, propylene glycol, dipropylene glycol, tripropylene glycol, butanediol, trimethylene glycol, ditrimethylene glycol, tetramethylene glycol, ditetramethylene glycol, and neopentyl glycol. Ethylene glycol is preferable. A solution in which the aluminium compound is dissolved in water or ethylene glycol is preferably used in order to prominently exhibit the effect of the present invention. An amount of the aluminium compound to be added will be described below.

### (Phosphorus compound)

Although the phosphorus compound of the polymerization catalyst of the present invention is not particularly limited, a phosphonic acid-based compound or a phosphinic acid-based compound is preferably used since an effect of enhancing activity of the catalyst is high. Among them, the phosphonic acid-based compound is more preferably used since the effect of enhancing activity of the catalyst is particularly high.

Among the above-described phosphorus compounds, a phosphorus compound having phosphorus element and a phenol structure in the same molecule is preferable. Although the phosphorus compound is not particularly limited as long as the phosphorus compound has phosphorus element and a phenol structure in the same molecule, one or more kinds of compounds selected from the group consisting of phosphonic acid-based compounds each having phosphorus element and a phenol structure in the same molecule and phosphinic acid-based compounds each having phosphorus element and a phenol structure in the same molecule is preferably used since an effect of enhancing activity of the catalyst is high, and one or more kinds of the phosphonic acid-based compounds each having phosphorus element and a phenol structure in the same molecule is more preferably used since an effect of enhancing activity of the catalyst is very high.

Examples of the phosphorus compound having phosphorus element and a phenol structure in the same molecule include compounds represented by P(=O)R¹(OR²)(OR³) and P(=O)R¹R⁴(OR²). R¹ represents a C6 to C50 hydrocarbon group containing a phenol moiety, or a C6 to C50 hydrocarbon group containing a phenol structure and a substituent such as a hydroxy group, a halogen group, an alkoxyl group, or an amino group. R⁴ represents a hydrogen atom, a C1 to C50 hydrocarbon group, or a C1 to C50 hydrocarbon group containing a substituent such as a hydroxy group, a halogen group, an alkoxyl group, or an amino group. R² and R³ each independently represent a hydrogen atom, a C1 to C50 hydrocarbon group, or a C1 to C50 hydrocarbon group containing a substituent such as a hydroxy group or an alkoxyl group. The hydrocarbon group may include a branched structure, an alicyclic structure such as cyclohexyl, or an aromatic ring structure such as phenyl or naphthyl. The terminal of R² and the terminal of R⁴ may bind to each other.

Examples of the phosphorus compound having phosphorus element and a phenol structure in the same molecule include p-hydroxyphenyl phosphonic acid, p-hydroxyphenyl phosphonic acid dimethyl, p-hydroxyphenyl phosphonic acid diethyl, p-hydroxyphenyl phosphonic acid diphenyl, bis(p-hydroxyphenyl)phosphinic acid, bis(p-hydroxyphenyl)phosphinic acid methyl, bis(p-hydroxyphenyl)phosphinic acid phenyl, p-hydroxyphenyl phosphinic acid, p-hydroxyphenyl phosphinic acid methyl, p-hydroxyphenyl phosphinic acid phenyl, and dialkyl 3,5-di-tert-butyl-4-hydroxybenzylphosphonate represented by chemical formula 1 described below. The phosphorus compound having phosphorus element and a phenol structure in the same molecule is particularly preferably phosphorus compounds having hindered phenol structures, and, among them, dialkyl 3,5-di-tert-butyl-4-hydroxybenzylphosphonate represented by chemical formula 1 described below is preferable. 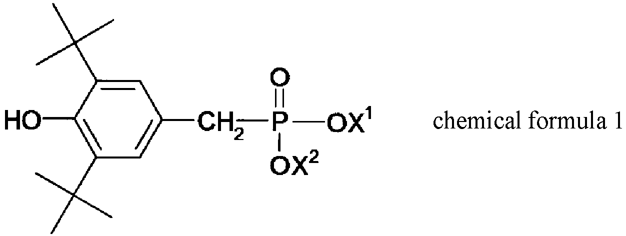 (In chemical formula 1, X¹ and X² each represent a hydrogen atom or a C1 to C4 alkyl group.)

The number of carbon atoms of the alkyl group of the above X¹, X² is preferably 1 to 4 and more preferably 1 to 2. Particularly, as an ethyl ester compound having two carbon atoms, Irganox 1222 manufactured by BASF is commercially available and can be easily obtained, and therefore, the phosphorus compound is most preferably diethyl 3,5-di-tert-butyl-4-hydroxybenzylphosphonate.

In the present invention, the phosphorus compound is preferably dialkyl 3,5-di-tert-butyl-4-hydroxybenzyl phosphonate represented by the above chemical formula 1. In addition thereto, modified products of dialkyl 3,5-di-tert-butyl-4-hydroxybenzyl phosphonate as represented by the following nine chemical formulas are also included. Hereinafter, the modified products will be described.

In a case where dialkyl 3,5-di-tert-butyl-4-hydroxybenzyl phosphonate that is the phosphorus compound represented by the above chemical formula 1 is used as the phosphorus compound, a structure of a part of the dialkyl 3,5-di-tert-butyl-4-hydroxybenzyl phosphonate that is the phosphorus compound represented by the above chemical formula 1 is changed in the heat treatment. For example, the structure of a part of dialkyl 3,5-di-tert-butyl-4-hydroxybenzyl phosphonate is changed to a structure caused by desorption of a t-butyl group, hydrolysis of an ethyl ester group, hydroxyethyl ester exchange (transesterification with ethylene glycol), or the like. Therefore, in the present invention, the phosphorus compound also includes phosphorus compounds obtained through the structure change, in addition to dialkyl 3,5-di-tert-butyl-4-hydroxybenzyl phosphonate represented by the above chemical formula 1. The desorption of a t-butyl group is prominently caused at a high temperature in the polymerization process.

The nine phosphorus compounds obtained by changing the structure of a part of diethyl 3,5-di-tert-butyl-4-hydroxybenzylphosphonate are indicated below as the phosphorus compounds. A component content of each phosphorus compound obtained by changing the structure, in a glycol solution, can be quantified by a P-NMR spectrum measurement method of the solution. An amount of the phosphorus compound to be added will be described below.

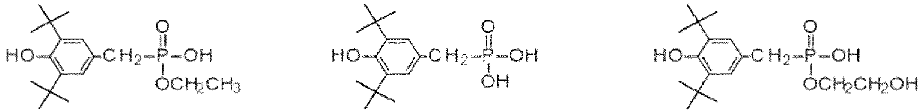

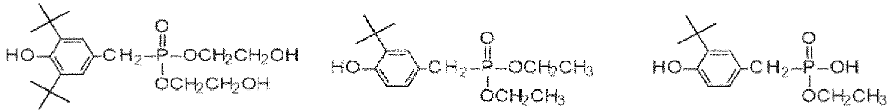

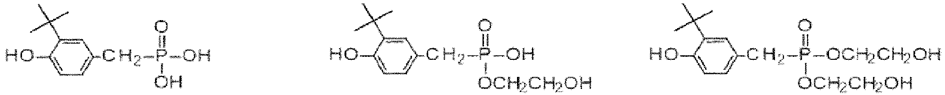

### <Added amount and content of aluminum atoms and phosphorus atoms>

In the copolyester resin of the present invention, the content of aluminum atoms is preferably 10 to 100 ppm by mass, more preferably 20 to 80 ppm by mass, and even more preferably 30 to 70 ppm by mass. If the content of aluminum atoms is smaller than 10 ppm by mass, polymerization activity may not be sufficiently exhibited. Meanwhile, if the content is larger than 100 ppm by mass, the effect may be saturated, and cost of the catalyst may be increased.

Even if aluminum atoms in the aluminum compound that functions as a catalyst are placed in a reduced-pressure environment during polymerization of the copolyester resin, almost 100% of a use amount of the aluminum atoms which is initially added to the system as a catalyst remains in the copolyester resin produced by polymerization. That is, the amount of the aluminum compound is not substantially changed before and after the polycondensation. Therefore, an amount of the aluminum atoms to be added with respect to the copolyester resin to be generated is preferably 10 to 100 ppm by mass, more preferably 20 to 80 ppm by mass, and even more preferably 30 to 70 ppm by mass. As described above, the mass of the "copolyester resin to be generated" can be calculated from an amount of added monomers such as the polyvalent carboxylic acid component (A) having a furan skeleton and the aliphatic polyvalent carboxylic acid component (B).

In the copolyester resin of the present invention, the content of phosphorus atoms is preferably 20 to 250 ppm by mass, more preferably 30 to 200 ppm by mass, even more preferably 40 to 150 ppm by mass, and particularly preferably 50 to 120 ppm by mass. If the content of phosphorus atoms is smaller than 20 ppm by mass, polymerization activity may be reduced or an amount of foreign matter may be increased. Meanwhile, if the content is larger than 250 ppm by mass, cost of the catalyst is increased, and furthermore, polymerization activity may be reduced.

When the phosphorus compound that functions as a catalyst together with the aluminum compound is placed in a reduced pressure environment during polymerization of the copolyester resin, a part (about 10 to 40%) of a use amount of the phosphorus compound which is initially added to the system as a catalyst is generally removed externally from the system. The removal proportion changes depending on an addition mole ratio of phosphorus atoms to aluminum atoms, basicity or acidity of an added aluminum-containing glycol solution or phosphorus-containing glycol solution, a method for adding an aluminum-containing solution and a phosphorus-containing solution (whether these solutions are added in the form of one liquid or are separately added), etc. Therefore, an amount of phosphorus atoms to be added with respect to the copolyester resin to be generated is preferably 20 to 250 ppm by mass, more preferably 30 to 200 ppm by mass, and even more preferably 40 to 150 ppm by mass.

In the copolyester resin, a content ratio of phosphorus atoms to aluminum atoms is preferably 1.1 to 2.8, more preferably 1.3 to 2.6, and even more preferably 1.5 to 2.5. As described above, aluminum atoms and phosphorus atoms in the copolyester resin are derived from the aluminum compound and the phosphorus compound, respectively, used as the polymerization catalysts for the copolyester resin. By using these aluminum compound and phosphorus compound at a specific ratio in combination, a complex having catalyst activity is functionally formed in the copolymerization system, and polymerization activity can be sufficiently exhibited. If the content ratio of phosphorus atoms to aluminum atoms is smaller than 1.1, thermal stability and thermal oxidation stability may be degraded or an amount of foreign matter may be increased. Meanwhile, if the content ratio of phosphorus atoms to aluminum atoms is larger than 2.8, an added amount of the phosphorus compound is excessively large, and cost of the catalyst is increased.

As described above, since a part (about 10 to 40%) of a use amount of the phosphorus compound which is initially added to the system as a catalyst is generally removed externally from the system when the phosphorus compound is placed in a reduced pressure environment during polymerization of the copolyester resin, an addition mole ratio of phosphorus atoms to aluminum atoms is preferably 1.3 to 2.5, more preferably 1.5 to 2.3, and even more preferably 1.7 to 2.2.

In the copolyester resin of the present invention, in a case where ethylene glycol is used as the polyhydric alcohol component, condensation occurs in ethylene glycol and diethylene glycol (DEG) is produced as a byproduct. In order to reduce an amount of DEG produced as the byproduct, a basic compound is preferably added as a DEG inhibitor. As the basic compound, tertiary amine such as triethylamine and tri-n-butylamine, quaternary ammonium salt such as tetraethylammonium hydroxide, etc., can be added.

It is effective to add various antioxidants when polymerization for the copolyester resin of the present invention is performed. Examples of the antioxidant include known antioxidants such as phenol-based antioxidants, phosphorus-based antioxidants, amine-based antioxidants, sulfur-based antioxidants, nitro compound-based antioxidants, and inorganic compound-based antioxidants. Phenol-based antioxidants having relatively high heat resistance are preferable. An added amount is preferably 0.05 parts by mass or more and 0.5 parts by mass or smaller with respect to 100 parts by mass of the obtained copolyester resin.

The copolyester resin of the present invention can be processed into a film. Inactive particles such as inorganic particles, organic salt particles, and crosslinked polymer particles can be contained in the film in order to improve handleability such as slipperiness, rollability, and blocking resistance. These particles may be inorganic or organic, or may be subjected to such surface treatment that the surfaces become, for example, hydrophilic or hydrophobic or may not be subjected to such surface treatment. However, for example, surface-treated particles may be preferable for, for example, enhancing dispersibility of the particles.

Examples of the inorganic particles include particles of calcium carbonate, kaolin, talc, magnesium carbonate, barium carbonate, calcium sulfate, barium sulfate, lithium phosphate, calcium phosphate, magnesium phosphate, aluminum oxide, silicon oxide, titanium oxide, zirconium oxide, lithium fluoride, sodium calcium alumisilicate, hydrophobic treated silica, inorganic treated silica, organic treated silica, glass powder, and silicon.

Examples of the organic salt particles include particles of calcium oxalate and terephthalic acid salts of calcium, barium, zinc, manganese, magnesium, etc.

Examples of the crosslinked polymer particles include particles of homopolymers or copolymers of divinyl benzene, styrene, acrylic acid, methacrylic acid, and vinyl-based monomers of acrylic acid or methacrylic acid. In addition thereto, organic particles of polytetrafluoroethylene, benzoguanamine resin, thermosetting epoxy resin, unsaturated polyester resin, thermosetting urea resin, thermosetting phenol resin, etc., may be used.

In the method in which the inactive particles are added to the polymerization reaction system, preferably, a slurry of the inactive particles is formed by using the polyhydric alcohol component that is the constituent component of the copolyester resin, and the slurry is added to a reaction system in which a melt viscosity is low in a period from before esterification or transesterification to before start of polycondensation. When the slurry of the inactive particles is prepared, physical dispersion using a high pressure disperser, a bead mill, ultrasonic dispersion, or the like is preferably performed. An appropriate chemical dispersion stabilizing process is preferably used in combination according to a kind of used particles in order to stabilize the dispersed slurry.

In the dispersion stabilizing process, for example, in the case of inorganic oxide particles, crosslinked polymer particles having carboxyl groups on the particle surfaces, etc., an alkali compound such as sodium hydroxide, potassium hydroxide, or lithium hydroxide is added to the slurry, and re-aggregation of particles can be inhibited by electrical repulsion. Furthermore, sodium tripolyphosphate or potassium tripolyphosphate is preferably added to the slurry in the case of calcium carbonate particles, hydroxyapatite particles, or the like.

It is also preferable that, when the slurry of the inactive particles is added to the polyester polymerization reaction system, the slurry is heated to a temperature close to a boiling point of the polyhydric alcohol component, from the viewpoint of dispersibility of the particles, since heat shock (temperature difference between the slurry and the polymerization reaction system) can be reduced when the slurry is added to the polymerization reaction system.

These additives may be added at any stage during polymerization of the copolyester resin or after the polymerization, or before or after the film is formed. The suitable stage depends on characteristics of the compound, and performance required for the film.

As a polymerization method for the copolyester resin of the present invention, a known method can be used. For example, either a method in which esterification between polyvalent carboxylic acid and polyhydric alcohol is performed, and polycondensation is thereafter performed in a melted state, or a method in which transesterification between an ester derivative of polyvalent carboxylic acid and polyhydric alcohol is performed, and polycondensation is thereafter performed in a melted state, can be used. The polymerization device may be of a batch type or a continuous type.

As a method for further increasing a molecular weight of polyester after the polycondensation, solid-state polymerization can be used. Polyester which is taken out in a chip-like state is sufficiently crystallized, and thereafter exposed to a temperature that is a melting point or lower, whereby the molecular weight can be increased to a predetermined molecular weight.

The lower limit of a reduced viscosity of the copolyester resin of the present invention is preferably 0.2 dl/g or more and more preferably 0.3 dl/g or more. The upper limit of the reduced viscosity is preferably 1.2 dl/g or smaller, more preferably 1.0 dl/g or smaller, even more preferably 0.8 dl/g or smaller, particularly preferably 0.6 dl/g or smaller, and most preferably 0.5 dl/g or smaller. In a case where the reduced viscosity is within the above-described range, strength and thermal properties of the resin, and a crystallization rate become satisfactory.

The copolyester resin of the present invention preferably has an acid value of 100 eq/ton or smaller after melt polycondensation. Within this range, enhancement of the acid value after the solid-state polymerization does not degrade thermal stability of the resin, and coloring during the process and reduction of strength due to reduction of a molecular weight do not occur.

A glass transition temperature of the copolyester resin of the present invention is preferably 65°C or higher and more preferably 70°C or higher. In a case where the glass transition temperature is 65°C or higher, the copolyester resin is likely to be applied to usage that requires high heat resistance, like PET.

A melting point of the copolyester resin of the present invention is preferably 200°C or higher and more preferably 205°C or higher. In a case where the melting point is 200°C or higher, the treatment temperature in the solid-state polymerization can be set to be sufficiently high, and therefore productivity can be enhanced.

The copolyester resin of the present invention can be molded into bottles, films, fibers, etc., by applying various molding methods to the copolyester resin.

### EXAMPLES

The present invention will be described below by way of examples. However, it is needless to say that the present invention is not limited to the examples.

The physical properties were measured by the following methods.

### Reduced viscosity measurement method

By using a mixed solvent of phenol/1,1,2,2-tetrachloroethane (6/4 (mass ratio)), 0.10 g of polyester resin was dissolved, and a reduced viscosity was measured at a temperature of 30°C by using an Ubbelohde viscometer, and was expressed in dl/g.

### Polymer composition

In 0.6 ml of a mixed solvent of trifluoroacetic acid/deuterated chloroform (15/85 (volume ratio)), 20 mg of polyester resin was dissolved, and centrifugation was performed. Thereafter, a supernatant liquid was collected, H-NMR measurement was performed, and a polymer composition was identified from an NMR spectrum.

The H-HMR measurement was performed by using the following device under the following conditions.
Device: Fourier transform nuclear magnetic resonance spectrometer (manufactured by BRUKER, AVANCE NEO600)
¹H resonance frequency: 600.13 MHz
Lock solvent: deuterated chloroform
Flip angle: 30°
Data sampling interval: four seconds
Delay time: one second
Measurement temperature: 30°C
Integration number: 128 times

### Concentration of terminal carboxy groups

In 0.6 ml of a mixed solvent of deuterated hexafluoroisopropanol/deuterated chloroform (1/9 (volume ratio)), 20 mg of polyester resin was dissolved, and centrifugation was performed. Thereafter, a supernatant liquid was collected, 10 µL of deuterated pyridine was added, H-NMR measurement was thereafter performed, and a concentration of terminal carboxy groups was obtained from an NMR spectrum. A device and conditions of the H-HMR measurement were the same as those for the polymer composition.

### Glass transition temperature, Melting point, Melting heat amount

A differential scanning calorimeter "Type DSC7000" manufactured by Hitachi High-Tech Science Corporation was used. In an aluminum pan, 5 mg of polyester resin was put, and a lid was pressed to seal the pan. Subsequently, the temperature was increased to 250°C once, and the resin was held at 250°C for five minutes. Thereafter, the resin was quenched to 25°C at a rate of -50°C/minute, and held at 25°C for five minutes. Thereafter, the measurement was performed at a temperature increase rate of 2°C/minute from 25°C to 250°C. From the DSC curve obtained in this measurement, a glass transition temperature was obtained at an intersection of an original baseline and an inflection point generated by baseline shift of the DSC curve, a melting point was obtained from an endothermic peak temperature of the DSC curve, and a melting heat amount was obtained by an integration value obtained from intersections of an extrapolated baseline and an endothermic curve generated by change at the time of melting.

### Melting heat amount by isothermal crystallization process

A differential scanning calorimeter "Type DSC7000" manufactured by Hitachi High-Tech Science Corporation was used. In an aluminum pan, 5 mg of polyester resin was put, and a lid was pressed to seal the pan. Subsequently, the temperature was increased to 250°C once, and the resin was held at 250°C for five minutes. Thereafter, the resin was quenched to 170°C at a rate of -50°C/minute, and held at 170°C for a predetermined time. Thereafter, the resin was quenched to 25°C with liquid nitrogen, and the measurement was performed at a temperature increase rate of 10°C/minute from 25°C to 250°C, and a melting heat amount was obtained by an integration value obtained from intersections of an extrapolated baseline and an endothermic curve generated by change at the time of melting, from the DSC curve obtained in this measurement.

### Content of aluminum atoms in resin

The resin was weighed into a platinum crucible, carbonized by an electric stove, and thereafter incinerated by a muffle furnace under the conditions of 550°C and eight hours. The incinerated sample was dissolved in 1.2 M hydrochloric acid, to prepare a sample solution. For the prepared sample solution, a concentration of aluminum atoms in the resin was obtained by high frequency inductively coupled plasma emission spectrometry.
Device: CIROS-120 manufactured by SPECTRO
Plasma output: 1400 W
Plasma gas: 13.0 L/min
Auxiliary gas: 2.0 L/min
Nebulizer: cross flow nebulizer
Chamber: cyclone chamber
Measurement wavelength: 167.078 nm

### Content of phosphorus atoms in resin

The resin was subjected to wet decomposition with sulfuric acid, nitric acid, and perchloric acid, and then neutralized with aqueous ammonia. Ammonium molybdate and hydrazine sulfate were added into the prepared solution, and an absorbance was measured at a wavelength of 830 nm by using an ultraviolet-visible absorptiometer (UV-1700 manufactured by SHIMADZU CORPORATION). The concentration of phosphorus atoms in the resin was determined from a calibration curve prepared in advance.

Preparation of an aluminum-containing ethylene glycol solution and a phosphorus-containing ethylene glycol solution used as catalysts will be described below.

### <Preparation of aluminum-containing ethylene glycol solution s>

In a compounding tank, equal amounts (volume ratio) of 20 g/L of aqueous solution of basic aluminum acetate and ethylene glycol were both put, and stirred at room temperature (23°C) for several hours, and water was thereafter distilled from the system while the obtained product was stirred at 50 to 90°C for several hours under a reduced pressure (3 kPa), to prepare an aluminum-containing ethylene glycol solution s containing 20 g/L of an aluminum compound.

### <Preparation of phosphorus-containing ethylene glycol solution t>

Irganox 1222 (manufactured by BASF) as a phosphorus compound and ethylene glycol were both put in a compounding tank, and heat-treated at 175°C for 150 minutes while being stirred under nitrogen purge, to prepare a phosphorus-containing ethylene glycol solution t containing 50 g/L of a phosphorus compound.

### (Example 1)

In a 2 liter electric heating wire heater-type stainless-steel autoclave having a stirrer, 2,5-furandicarboxylic acid (manufactured by Ningbo Biomass & Biotechnology Co., Ltd: 99 mol%) and succinic acid (GR manufactured by NACALAI TESQUE, INC.: 1 mol%) were put as the polyvalent carboxylic acid component, and ethylene glycol (manufactured by Mitsubishi Chemical Corporation: 200 mol%) was put as the polyhydric alcohol component by a molar amount that was twice a molar amount of the polyvalent carboxylic acid component, and 0.3 mol% of triethylamine (GR manufactured by NACALAI TESQUE, INC.) with respect to the polyvalent carboxylic acid component was added, and esterification was performed for 120 minutes while water was distilled externally from the system at 240°C under a normal pressure, to obtain an ester oligomer for which an esterification rate was 95%.

A mixed solution of the aluminum-containing ethylene glycol solution s and the phosphorus-containing ethylene glycol solution t which were prepared in the above-described method were added, in the form of one liquid, to the obtained ester oligomer. The mixed solution was produced so as to contain 30 ppm by mass of aluminum element with respect to the mass of the ester oligomer and 74 ppm by mass of phosphorus element with respect to the mass of the ester oligomer. An addition mole ratio of the phosphorus element to the aluminum element was 2.15.

Thereafter, the temperature of the system was increased to 270°C over one hour, and, during the temperature increase, the pressure of the system was gradually reduced to 0.15 kPa. Under this condition, polycondensation was performed, and copolyester resin having a reduced viscosity of 0.36 dl/g and an acid value of 23 eq/ton was obtained. The copolyester resin contained 30 ppm by mass of aluminum atoms and 58 ppm by mass of phosphorus atoms, and had a glass transition temperature of 76°C, a melting point of 214°C, and a melting heat amount of 5 J/g.

### (Examples 2, 3)

The process was performed in the same manner as in Example 1 except that a copolymerization amount of succinic acid as the polyvalent carboxylic acid component was changed. Table 1 indicates the results of the obtained copolyester resins. As in Example 1, the copolyester resin having a high glass transition temperature, a high melting point, and a high melting heat amount was obtained.

### (Examples 4, 5)

The process was performed in the same manner as in Example 2 except that succinic acid as the polyvalent carboxylic acid component was changed to adipic acid or sebacic acid. Table 1 indicates the results of the obtained copolyester resins. As in Example 1, the copolyester resin having a high glass transition temperature, a high melting point, and a high melting heat amount was obtained.

### (Comparative example 1)

The process was performed in the same manner as in Example 1 except that succinic acid as a copolymerization component was not used. Table 1 indicates the results of the obtained polyester resin. The melting heat amount was 1 J/g or smaller, and the crystallization rate was low.

### (Comparative example 2)

The process was performed in the same manner as in Example 1 except that the copolymerization amount of succinic acid as the polyvalent carboxylic acid component was changed to 8 mol%. Table 1 indicates the results of the obtained copolyester resin. The melting heat amount was 1 J/g or smaller, and the crystallization rate was low.

### (Comparative examples 3, 4)

The process was performed in the same manner as in Example 1 except that succinic acid as the polyvalent carboxylic acid component was changed to terephthalic acid or 1,4-cyclohexanedicarboxylic acid. Table 1 indicates the results of the obtained copolyester resins. The melting heat amount was 1 J/g or smaller, and the crystallization rate was low.

**[Table 1]**

| | | Unit | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Composition | FDCA | mol% | 99 | 98 | 96 | 98 | 98 | 100 | 92 | 98 | 98 |
| | SuA | mol% | 1 | 2 | 4 | | | | 8 | | |
| | AA | mol% | | | | 2 | | | | | |
| | SA | mol% | | | | | 2 | | | | |
| | CHDA | mol% | | | | | | | | 2 | |
| | TPA | mol% | | | | | | | | | 2 |
| | EG | mol% | 100 | 100 | 100 | 100 | 100 | 100 | 100 | 100 | 100 |
| Catalyst | Al | ppm | 30 | 29 | 30 | 30 | 31 | 29 | 30 | 30 | 30 |
| | P | ppm | 58 | 56 | 59 | 56 | 56 | 56 | 59 | 55 | 55 |
| Physical Properties | Tg | °C | 82 | 78 | 74 | 77 | 77 | 81 | 70 | 77 | 77 |
| | Tm | °C | 214 | 214 | 209 | 213 | 214 | 215 | 203 | 214 | 213 |
| | 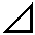 Hm | J/g | 5 | 18 | 7 | 26 | 5 | ≦1 | ≦1 | ≦1 | ≦1 |
| | ηsp/c | dl/g | 0.36 | 0.41 | 0.37 | 0.38 | 0.35 | 0.39 | 0.37 | 0.38 | 0.41 |
| | AV | eq/t | 23 | 22 | 24 | 19 | 21 | 25 | 23 | 22 | 21 |

| | | | | | | | | | | | |
|---|---|---|---|---|---|---|---|---|---|---|---|
| FDCA: 2,5-furandicarboxylic acid, SuA: succinic acid, AA: adipic acid, SA: sebacic acid, CHDA: 1,4-cyclohexanedicarboxylic acid, TPA: terephthalic acid, EG: ethylene glycol Tg: glass transition temperature, Tm: melting point, ΔHm: melting heat amount, ηsp/c: reduced viscosity, AV: acid value (terminal carboxy group concentration) | | | | | | | | | | | |

### (Example 6, Comparative example 5)

The processes were performed in the same manners as in Example 2 and Comparative example 1 except that the molecular weight was increased such that the reduced viscosity was equivalent to 0.6 dl/g. Isothermal crystallization of the obtained (co)polyester resin was performed at 170°C, and the melting heat amount was measured. The predetermined times were 0 hours, in which the crystallization was not performed, two hours, three hours, and four hours. Table 2 indicates the results. Since the molecular weight was increased, the melting heat amount was 1 J/g or smaller at the temperature increase rate of 2°C/minute. However, according to the result of 170°C isothermal crystallization, it was confirmed that an effect of increasing a crystallization rate was exhibited by copolymerization even though the molecular weight was increased.

**[Table 2]**

| | | Unit | Example 6 | Comparative Example 5 |
|---|---|---|---|---|
| Composition | FDCA | mol% | 98 | 100 |
| | SuA | mol% | 2 | |
| | AA | mol% | | |
| | EG | mol% | 100 | 100 |
| Catalyst | Al | ppm | 29 | 29 |
| | P | ppm | 56 | 56 |
| Physical Properties | 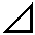 Hm⁰ | J/g | ≦ 1 | ≦ 1 |
| | 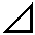 Hm² | J/g | 7 | 4 |
| | 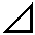 Hm³ | J/g | 20 | 15 |
| | 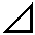 Hm⁴ | J/g | 44 | 19 |
| | ηsp/c | dl/g | 0.56 | 0.59 |
| | AV | eq/t | 7 | 7 |

| | | | | |
|---|---|---|---|---|
| ΔHm⁰: held for 0 hours at 170°C ΔHm²: held for two hours at 170°C ΔHm³: held for three hours at 170°C ΔHm⁴: held for four hours at 170°C | | | | |

### INDUSTRIAL APPLICABILITY

The polyester resin having both excellent heat resistance and high crystallinity can be obtained by containing, in a molecular chain, a furan skeleton and a small amount of aliphatic polyvalent carboxylic acid. Thus, the polyester resin can be produced in a simple method, and the polyester resin that allows reduction of CO2 emission can be produced in consideration of LCA. Furthermore, the polyester resin having a high degree of biomass can be produced, and environment-friendly sustainable polyester resin can be produced.

## Claims

1. A copolyester resin comprising:
a polyvalent carboxylic acid component and a polyhydric alcohol component as constituent components, wherein
the polyvalent carboxylic acid component contains a polyvalent carboxylic acid component (A) having a furan skeleton, and an aliphatic polyvalent carboxylic acid component (B) at a molar ratio of (A)/(B)=95/5 to 99.9/0.1.

2. The copolyester resin according to claim 1, comprising aluminum atoms and phosphorus atoms.

3. The copolyester resin according to claim 1, wherein the aliphatic polyvalent carboxylic acid component (B) is a C2 to C12 aliphatic dicarboxylic acid.

4. The copolyester resin according to claim 1, wherein the aliphatic polyvalent carboxylic acid component (B) is a C3 to C7 aliphatic dicarboxylic acid.

5. The copolyester resin according to claim 1, wherein ethylene glycol is contained as the polyhydric alcohol component.

6. The copolyester resin according to claim 1, wherein the copolyester resin has a melting point of 200°C or higher.

7. The copolyester resin according to claim 1, wherein the copolyester resin has a glass transition temperature of 65°C or higher.

8. The copolyester resin according to claim 1, wherein the copolyester resin has a reduced viscosity ranging from 0.2 dl/g to 0.6 dl/g.

9. The copolyester resin according to claim 1, wherein
the aliphatic polyvalent carboxylic acid component (B) is a C3 to C7 aliphatic dicarboxylic acid, and
the copolyester resin has a glass transition temperature of 65°C or higher.

10. A molded product formed of the copolyester resin according to any one of claims 1 to 9, wherein the molded product is a bottle, a film, or a fiber.
